# EUROPEAN PATENT APPLICATION

(11) **EP 1 843 290 A1**
(43) Date of publication of application: **10.10.2007**
(21) Application number: 06300345.3
(22) Date of filing: 07.04.2006
(51) Int. Cl.: G06Q 30/00

(54) **Improved global distribution system for searching best travel deals**

(71) Applicant: Amadeus s.a.s, 06410 Biot (FR)
(72) Inventor: Chaumont, Gilles c/o Office méditerranéen de brevets d'invention, Cabinet Hautier, 06000 Nice (FR); Dufresne, Thierry c/o Office méditerrranéen de brevets, Cabinet Hautier, 06000 NICE (FR); Dourthe, Cédric c/o Office méditerranéen de brevets d'invention, Cabinet Hautier, 06000 Nice (FR); Patoureaux, Marc c/o Office méditerranéen de brevets, Cabinet Hautier, 06000 Nice (FR)
(74) Representative: Decobert, Jean-Pascal

(57) **Abstract**

A global distribution system (GDS) organized for searching travel deals from a plurality of travel vendor fare databases is described. The GDS includes a travel multi-vendor search engine (TMVSE) operating on any one of the plurality of travel vendor fare databases it has access to. A travel deal tracker (TDT) is associated to the TMVSE. The TDT provides directions to the TMVSE to limit the number of required transactions needed to obtain the searched travel deals. The TDT is interrogated by the TMVSE each time a request from a travel comparison website is received. For each received request, directions are obtained under the form of a short list of travel vendor fare databases from where searching must be conducted.

A GDS organized according to the invention allows to drastically reduce the overall level of transactions required to answer end-user requests.

## Description

### FIELD OF THE INVENTION

The present invention relates generally to the field of travel search sites, and more specifically, describes an improved global distribution system (GDS) capable of more efficiently processing end-user travel search requests.

### BACKGROUND OF THE INVENTION

The proliferation of travel search sites in the recent years has changed the way travelers research and book travel solutions. Travel search sites include a variety of specialized websites easily accessible over the Internet, the world network, through its most spread application: the world-wide-web or Web. Indeed, more and more travelers are now booking travel products online. However, end-users of those websites well know they have no guarantee of finding the cheapest air fares, hotel rooms and other travel products they are looking for if they only consult a single website. Indeed, no single site has presently the capability of exploring all possible solutions in response to a particular travel request. All have their own limitations, e.g., they do not consider all airlines or all hotel chains when searching to be able to return a response in an acceptable elapsed time or because they just do not have access to some travel vendor databases and reservation systems.

As a consequence, an end-user who wants to know where to get the best deal for a particular travel request must consider, as a first option, the possibility of submitting the same request to several sites. This generally implies to spend a long time navigating among numerous travel websites though; each site having its own user interface. And, eventually, the end-user has however only gathered information from the travel vendors he/she is aware of and better travel opportunities may have been missed.

To simplify the online travel shopping process other travel search sites have been made able to search several travel websites simultaneously. Sometime referred to as meta-search sites or aggregators they are devised to perform a comparison between what is offered on multiple online travel vendor websites. If this second option is more comfortable for the end-user which has normally to interrogate only a single comparison site, it has its own limitations too. Travel vendor comparison websites, which have necessarily finite computer resources, must work with a pre-selected list of vendors. This does not guarantee to compare all existing travel deals either. Knowing this limitation, the end-user will then attempt to verify the relevance of a proposed solution by further comparing it with what can be obtained from other known travel vendor comparison websites.

Hence, in both cases, the number of transactions generated for a same travel request, taken also into consideration the number of end-users to be supported simultaneously, adversely impact airline and other travel service provider computer systems and networks on which they are connected.

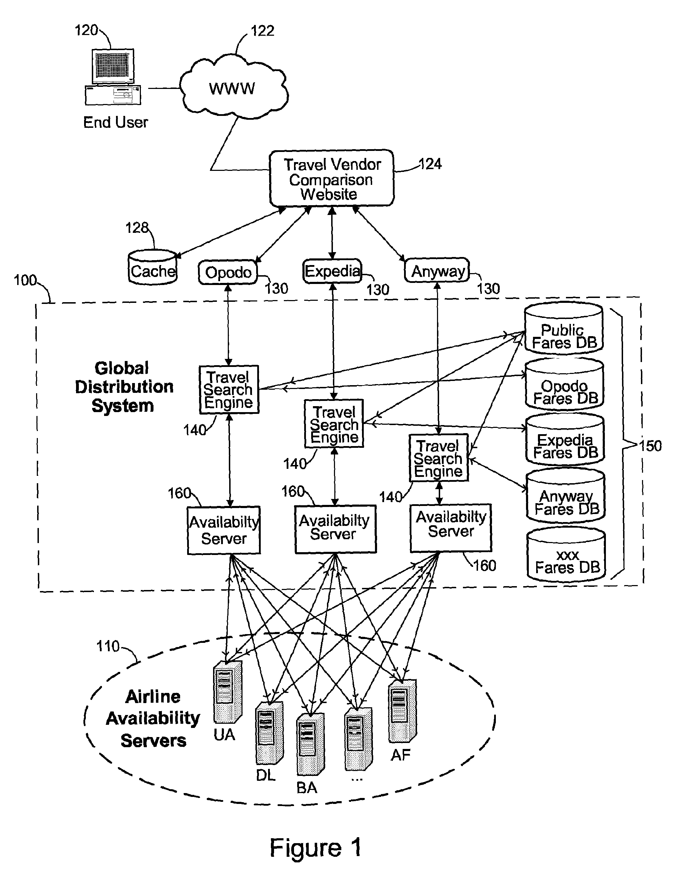

To illustrate this, Figure 1 depicts the current architecture of a large computerized travel system organized around a GDS (100) or global distribution system. Initiated by some airline companies, and originally mainly oriented to support air traffic (but not limited to), GDSs are proprietary computer systems allowing real-time access to airline fares, schedules, and seating availability and offering the capability of booking reservations for travel agencies and online travel vendors. To this end, a GDS must have access to a pool of airline servers (110) in order to check the actual availability of, e.g., the flight seats booked by travelers and end-users (120) of the system. Online travel vendor sites (130), which are clients of the GDS (100), are supported through dedicated travel search engines or TSEs (140). GDS also hosts, as shown, the specific fare databases (150) of these travel vendor sites or has a remote access to them through a network.

Hence, with the current architecture of a large travel system as depicted in Figure 1, end-users (120) forward their travel requests, e.g., to a travel vendor comparison website (124) through the Internet (122) from a Web navigator application. Once received by the travel vendor comparison website, the end user request is then automatically replicated towards each travel vendor website (130) actually considered by the comparison site, and also, possibly, towards a local resource or cache (128) where recent or particular travel deals may have been stored. Individual travel vendor sites that are supported by a GDS (100) have each their own specificities so that GDS must provide as many TSEs (140) as there are different travel vendor sites. Then, a first technical limitation resides in the number of travel sites that can be practically accessed to perform a comprehensive search among all possible deals that would potentially match an end-user request. Indeed, more than 10,000 travel vendor sites exist around the world. Since even the most powerful comparison site has limited computing and communication resources not all vendor sites can be examined in practice. And, as this can be seen from Figure 1, even considering a limited subset of them generates a very large number of transactions between the components involved, i.e., the travel vendor sites (130), the TSEs (140) and the databases (150).

Moreover, each TSE (140) must get the availability information through individual availability servers (160) accessing the pool of airline availability servers (110) mentioned above. Because the same travel request (i.e.: for a same destination and for the same travel dates) is submitted from many TSEs the airline availability servers are interrogated several times with the same inputs thus contributing to generate traffic and consuming uselessly their computing and communication resources.

It is therefore a broad object of the invention to overcome the drawbacks, here above mentioned, of the background art.

It is more specifically an object of the invention to disclose a GDS organization that allows to drastically reduce the overall level of transactions required when answering to end-user requests.

It is also an object of the invention to build up an expertise by tracking completed travel deals in order to only interrogate those of the travel vendor databases that are relevant when processing end-user requests; thus, contributing to further reduce the overall level of transactions and saving on computing and communication resources.

Further objects, features and advantages of the present invention will become apparent to the ones skilled in the art upon examination of the following description in reference to the accompanying drawings. It is intended that any additional advantages be incorporated herein.

### SUMMARY OF THE INVENTION

A global distribution system (GDS) organized for searching travel deals from a plurality of travel vendor fare databases is described. The GDS includes a travel multi-vendor search engine (TMVSE) operating on any one of the plurality of travel vendor fare databases it has access to. A travel deal tracker (TDT) is associated to the TMVSE. The TDT provides directions to the TMVSE to limit the number of required transactions needed to obtain the searched travel deals. The TDT is interrogated by the TMVSE each time a request from a travel comparison website is received. For each received request, directions are obtained under the form of a short list of travel vendor from where searching must be conducted.

### BRIEF DESCRIPTION OF THE DRAWINGS

FIGURE 1 illustrates a travel system organized around a state-of-the-art GDS.
FIGURE 2 illustrates a travel system organized around a GDS according to the invention including a travel multi-vendor search engine (TMVSE) and its associated travel deal tracker (TDT).
FIGURE 3 describes the components of the TDT including: a travel deal expert, a travel vendors database, a deal expert memory and a deal acquiring expert.
FIGURE 4 is the flow chart of the search operations conducted within GDS to respond to an end-user request.
FIGURE 5 further describes how TDT responds to a TMSVE interrogation and delivers a short list of relevant travel vendors.
FIGURE 6 describes the operations performed by the deal acquiring expert to maintain current the level of expertise of the TDT.
FIGURE 7 shows a preferred organization of the deal expert memory.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

Although the invention is here after described through a particular example based on the airline industry it will be understood by those skilled in the art that the invention can apply as well to other areas, especially, to all forms of travel service providers. This includes, but is not limited to, travel products such as hotel rooms, rented cars, seats in trains, boats etc.

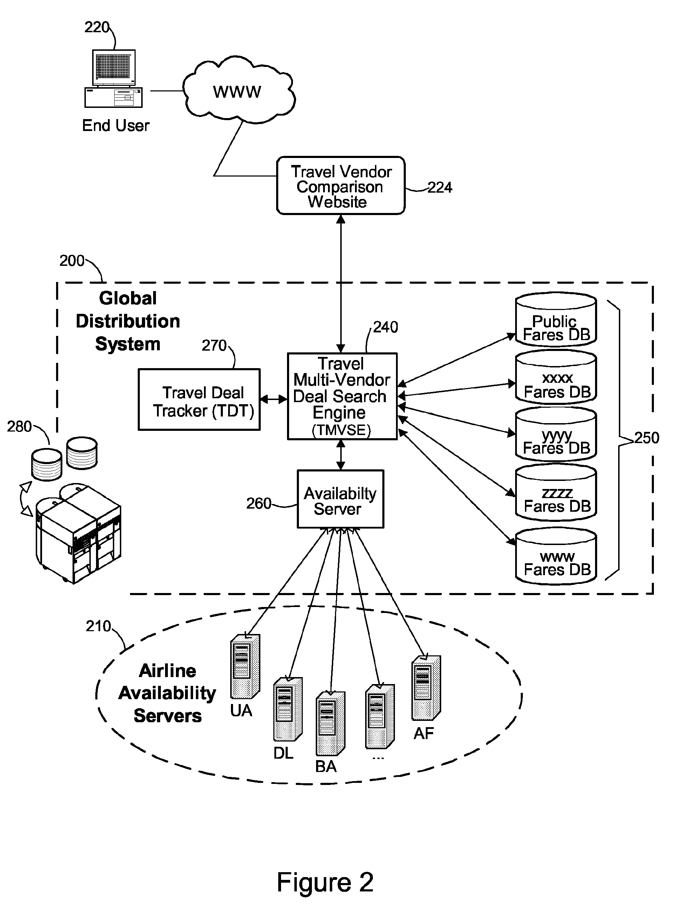

**Figure 2** shows a GDS (200) organized according to the invention. Typically, such a GDS is operated from a large computerized system with ample storage capacities such as external disk drives (280).

As with previous GDS organization shown in Figure 1, an end-user that wants to find the best deal for its travel request needs to access a travel comparison website (224). In this case however the travel comparison website has only to forward a single request to the GDS, i.e., to a travel multi-vendor search engine or TMVSE (240) interfacing the fare travel vendor databases (250) hosted by the GDS, or remotely accessible through a network (not shown), and a travel deal tracker or TDT (270), further described in the following. TDT is aimed at gathering information on completed travel deals in order to build up an expertise on travel vendor specifics. Therefore, on the basis of the expertise acquired by the travel deal tracker and taking into account the characteristics of the end-user requests, the travel multi-vendor search engine has only to search the relevant travel vendor databases. This permits to drastically limit the number of required transactions making feasible the implementation of a single search engine. Thus, with this approach, there is also a single availability server (260) attached to the search engine (240) so that airlines availability servers (210) are just polled once per end-user travel request while they are interrogated many times, for a same request, with the state-of-the-art GDS organization discussed in Figure 1.

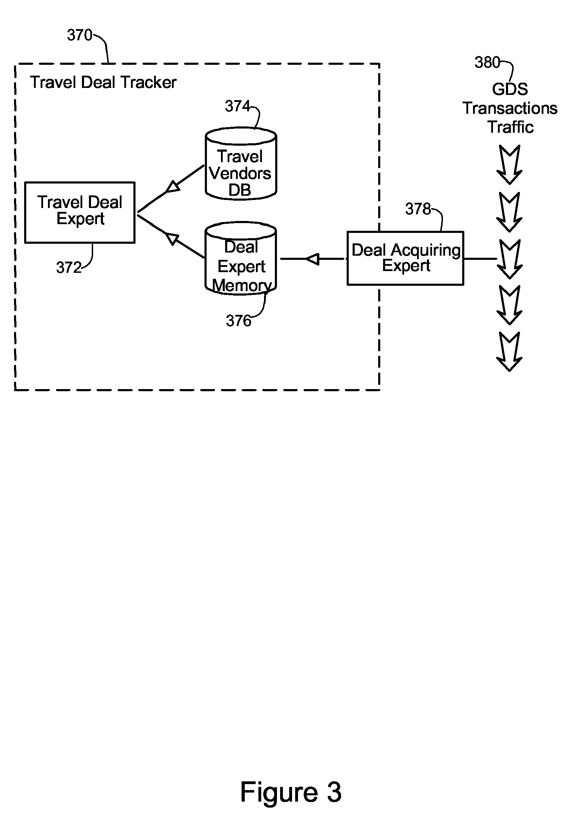

**Figure 3** describes the travel deal tracker or TDT (370) and its associated components. The prime goal of TDT is to direct the searches to be performed for responding to a travel request. Only the relevant travel vendors, i.e., those that are known to have good deals and are susceptible to best fulfill the current travel request are retained. Directing a search thus consists to have TDT communicating to TMVSE a short list of selected travel vendors, best adapted for a given travel request, thus limiting the number of transactions to be performed at a level that can be handled by the multi-vendor search engine in the allowable elapsed time of an end-user query. To return a relevant list of travel vendors, TDT needs to get its inputs from the travel request itself. This includes origin, destination and travel dates. Indeed, if not directed by TDT, the travel search engine would be faced to the impossible task of browsing all vendor databases for each received end-user query. This would trigger millions of transactions per second, a level which is just not achievable with current computer resources, and would also assume communication costs that would not be anyway acceptable.

To this end, TDT includes a travel deal expert (372) in relation with a deal expert memory (376). The deal expert memory is used to build up the TDT expertise on the basis of the deals already processed by the GDS (380). It is organized to gather information mainly on the low fare transactions processed by the GDS and on a per travel vendor basis. Also, it is organized by travel market so that the travel deal expert can retrieve directly the relevant travel vendors for a given travel request. A travel market is defined on the basis of certain characteristics, often including geographic characteristics, shared by a group of potential customers. For example, the three-star hotels of a certain resort area may constitute a travel market. With the particular example used to describe the invention, which is based on the airline industry, a travel market must be understood as the set of solutions offered by all airline service providers between two cities or two groups of cities. As an example, a travel market is the one between NICE, France and LONDON, UK. This would include potentially all best opportunities to fly between those two cities taking into consideration that several airports may have to be considered too. A broader market definition could consider all travel solutions between the east coast of the North American continent and the western part of Europe.

The travel deal vendor database (374) is designed to reference all the travel vendor of the travel markets considered by a GDS. It contains general information on the specificities of travel vendors, for example, their geographical localization. This information is cross-referenced with the content of the deal expert memory in order to retain only the travel vendors that are relevant for responding to an end-user request. For instance, it would not be pertinent to consider deals proposed by a local Japanese travel vendor for a traveler in the European community.

The deal acquiring expert (378) is the component in charge of acquiring the information needed to build and maintain TDT expertise. It is used to feed the deal expert memory (376) mentioned above. To acquire this expertise GDS traffic (380) is scanned. Because a GDS typically processes several millions of transactions a day a statistical sampling of the GDS production traffic is rather performed. Each transaction examined by the deal acquiring expert is first checked to determine its level of pertinence. Only significant transactions are kept; especially, those that have a too specific context are rejected. It is for example the case of transactions processed under specific deal agreements (e.g., the agreements sometime negotiated with some airline carriers by large corporations for their employees) or transactions performed for a specific type of passengers. In such cases, the deal observed has no significance for the regular 'average' end-user. Therefore, significant transactions are used to feed the deal expert memory and keep it updated. Each significant transaction which is retained is associated with a pertinence factor. For example, the observed frequency of occurrences of a deal is the key factor used to decide if it is worth entering it in the deal expert memory.

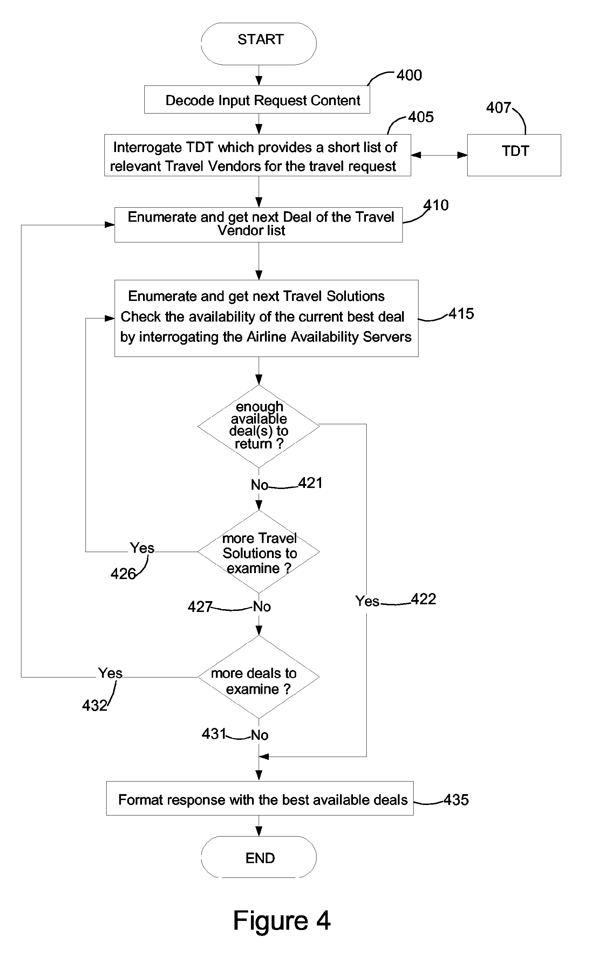

**Figure 4** describes the overall process when a request is received by the TMVSE shown, e.g., in figure 2 (240). Content of input request is decoded (400) so that TDT component (407) previously discussed is interrogated. As a result of the interrogation, TDT provides a short list of travel vendors (405) susceptible to best fit in with the incoming request.

Then, each deal offered by each travel vendor of the short list is possibly gone through (410). This includes the step of checking the actual availability of the deals (415) by interrogating the airline availability servers shown in figure 2 (210) so that a real travel solution can be indeed proposed to the end-user.

The checking steps that follow are used to loop through the deals of the short list of travel vendors. Looping ends when enough deals have been gathered (422). This occurs, e.g., when a predetermined number of deals has been reached (this can be set as a result of information contained in the input request or it is a default or configurable parameter of the system). In this case looping ends and a response with the best available deals, destined for the end-user, is formatted (435).

If more travel solutions exist (426) for the current travel deal and more deals need to be gathered (421) they must be examined by going back to step (415). If not (427), and if there are deals left to be examined (432), process of input request returns to step (410) described here above. However, if none is left (431), a response must be formatted (435) with what was gathered. This takes care of the initialization phase of the process, when few deals have been collected yet, or if few deals actually exist for the current input request and the predetermined level of deals cannot be reached.

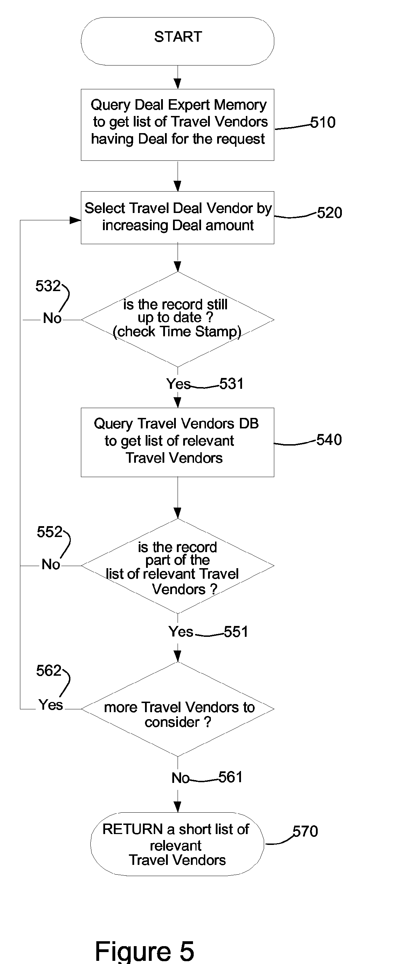

**Figure 5** focuses on the interrogation step (405, 407) shown in previous figure. Interrogation of TDT, after input request has been decoded, first translates into a query (510) towards the deal expert memory (376) shown in figure 3 so that this latter returns a list of travel vendors actually having deals for the current request. In the response to the query (510) travel vendors are sorted in increasing order of offered deals amount (520). Following step is aimed at checking if the deal record currently considered for selecting a travel vendor is up-to-date by checking its associated time-stamp. If not (532), a higher deal amount, and another travel vendor may have to be considered in going back to step (520). When record, and travel vendor, has been retained (531) a query is issued towards the travel vendor database (374), shown in figure 3, to obtain a list of travel vendors that are relevant for the current input request (540). As already mentioned it would not make sense to have, e.g., a travel vendor located in Japan retained for a traveler residing in Europe and booking a trip within the limits of the European community (even though the Japan travel vendor may occasionally have good opportunities for flights between European cities). If this is indeed the case, current record is ignored and process returns (552) to previous step (520). If record is retained (551) one has then to consider the possibility of including more travel vendors. Hence, if the list of relevant travel vendors is insufficient, interrogation process also returns (562) to step (520). The number of travel vendors to consider has already been discussed with figure 4. When the number of selected travel vendors has been reached (561), or all have been gone through, the short list is returned (570) to the interrogation step (405) shown in figure 4.

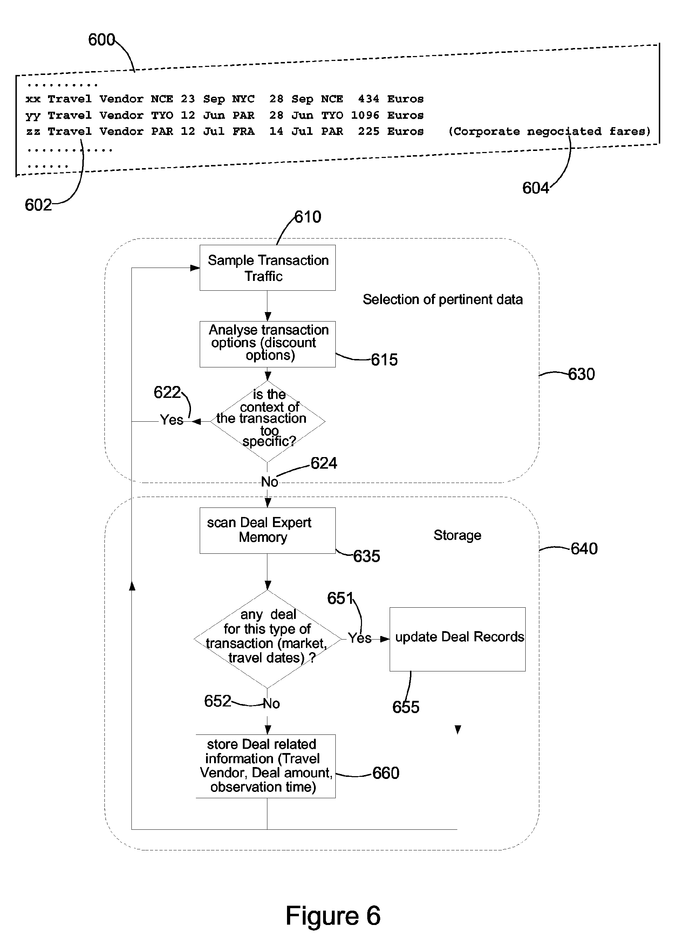

**Figure 6** discusses the operation of the deal acquiring expert (378) shown in figure 3. This component works on samples of the traffic transactions converging to the GDS (610). Transaction examples are shown (600). Typically, they concern various travel vendors (602). The fare applied to a particular transaction may not be a public fare. For example, it may have been negotiated by a large organization for its employees (604). Transaction samples are thus analyzed to determine their level of pertinence (615). This is done in the front-end part of the component (630) which has access to all GDS transactions as shown (380) in figure 3. Hence, a captured transaction may be too specific to be retained. Although this may depend on a particular application of the invention corporate negotiated fares, such as (604), are generally excluded since these fares are not made available to anyone. In this case, captured transaction is ignored (622) and process resume at step (610) to catch a new one. If, however, the transaction is kept (624) the deal expert memory is scanned (635) to find similar deals, e.g., a deal concerning a same commercial market or deals for same travel dates. If similar deal records are indeed found the captured transaction is used to update them (655). Otherwise (652), new records are created (660) in the deal expert memory (376), where the information extracted from the transactions (600) is stored. In both cases process resumes at step (610) to capture new transactions and keeps watching GDS traffic. This part of the process (640) is thus aimed at maintaining current the level of expertise of TDT.

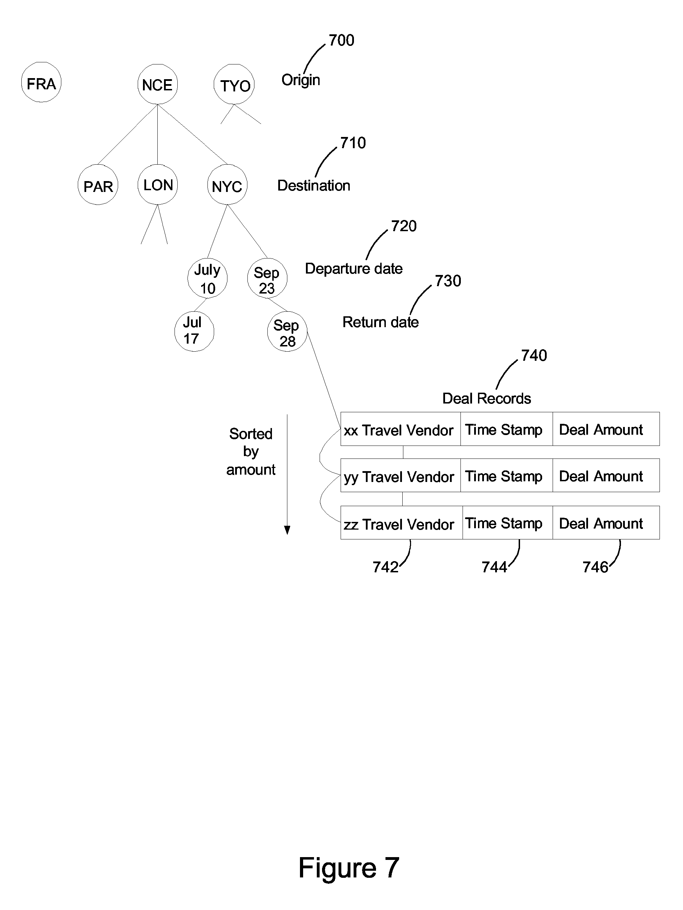

**Figure 7** sketches how the deal expert memory is preferably organized. Tree structures are formed whose roots are city origins (700). The next level of nodes considers the destinations (710). Then, departure dates (720) and return dates (730) nodes are further found in the tree structure before reaching the deal records (740) where deals offered by travel vendors (742) are sorted in increasing order of deal amounts (746). Each record includes a time stamp (744) to check the validity of the record as previously stated.

## Claims

1. A global distribution system (GDS) organized for searching travel deals from a plurality of travel vendor fare databases (250) accessible by said GDS (200), comprising:
a travel multi-vendor search engine (TMVSE) operating on any database of said plurality of travel vendor fare databases;
a travel deal tracker (TDT) associated to said TMVSE (240), said TDT (270) providing directions to said TMVSE to limit the number of required transactions needed to obtain said searched travel deals.

2. The system of claim 1 wherein said TDT is interrogated by said TMVSE each time a request from a travel comparison website (224) is received.

3. The system of claim 1 or 2 wherein said TMVSE obtains said directions under the form of a short list of said travel vendor fare databases from where searching must be conducted for each said received request.

4. The system according to any one of the previous claims wherein said TDT includes a deal acquiring expert system (378).

5. The system of claim 4 wherein said deal acquiring expert selects, among all transactions completed by said GDS (380), the relevant transactions used to build up a travel deal expertise.

6. The system according to any one of the previous claims wherein said TDT includes a deal expert memory system (376) to store said selected relevant transactions.

7. The system according to any one of the previous claims wherein said TDT includes a database of travel vendor specificities (374).

8. The system according to any one of the previous claims wherein said TDT includes a travel deal expert (372) aimed at returning said short list of travel vendor fare databases to be searched, said travel deal expert using said deal expert memory (376) and said database of travel vendor specificities (374) to compile said short list.

9. The system according to claim 1 including a single availability server (260) for checking availability of said searched travel deals.

10. A method for searching travel deals from a plurality of travel vendor fare databases (250) accessible by a GDS (200) upon receiving a travel input request, said method comprising the steps of:
decoding said input request content (400);
interrogating a travel deal tracker (TDT) component (407) on the basis of the decoded content of said travel input request to obtain directions prior to accessing said travel vendor fare databases;
obtaining (405) from said TDT a short list of travel vendors susceptible to best fit in with said travel input request;
enumerating all travel deals (410) out of said short list of travel vendors;
checking availability of said travel deals (415) so as to get actual travel solutions;
formatting a response including the best available deals (435).

11. The method of claim 10 wherein the enumerating step is interrupted when a predetermined number of available deals have been gathered (422).

12. The method of claim 10 wherein the enumerating step ends when said all travel deals have been considered (431).

13. The method of claim 10 wherein the checking step keeps examining more travel solutions (426) to complete travel deals.

14. The method according to claim 10 wherein the step of obtaining said short list of travel vendors includes the further steps of:
querying (510) a deal expert memory (376) to get an initial list of said travel vendors that have deals fitting said travel input request;
selecting said travel vendors in increasing order of deals amount (520);
checking deal records to retain only those that are up-to-date (531);
querying (540) a travel vendor database (374) to get a list of relevant travel vendors on the basis of said decoded travel input request;
checking deal records to retain only those offered by said relevant travel vendors(551);
keeps moving through said initial list (562) until all said travel vendors have been considered (561);
returning said short list of relevant travel vendors for said travel input request (570).

15. The method according to claim 14 wherein the step of moving through said initial list ends when a predetermined number of travel vendors have been considered.

16. The method according to claim 14 or 15 wherein the querying step implies the prior step of maintaining current the level of expertise of said deal expert memory, said maintaining step comprising the steps of:
sampling GDS traffic to capture travel transactions (610);
analyzing the level of pertinence of said transactions (615), said analyzing
step further comprising the optional step of:
discarding those of said transactions whose context is too specific (622); and, if not (624),
scanning (635) the deal expert memory (376) to find deals matching with said travel transactions; said scanning step followed by the exclusive steps of:
updating said matching deals (655); or
storing deals related information in said deal expert memory (660); and
keeps sampling GDS traffic (610).

17. A computer program product stored on a computer readable storage medium, comprising computer readable code means for causing at least one computer to operate the method for searching travel deals according to any one of the claims 10 to 16.
